(19) Europäisches Patentamt
European Patent Office
Office européen des brevets

(11) EP 2 487 627 A1

(12) EUROPEAN PATENT APPLICATION

(43) Date of publication:
15.08.2012  Bulletin 2012/33

(51) Int Cl.:
*G06N 7/06* (2006.01)

(21) Application number: 11382039.3

(22) Date of filing: 11.02.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: FUNDACION TECNALIA RESEARCH &
INNOVATION
48160 Derio Vizcaya (ES)

(72) Inventors:
• Garrote Contreras, Estíbaliz
48170, Zamudio (Vizcaya) (ES)
• Iriondo Bengoa, Pedro, María
48940, Leioa (Vizcaya) (ES)

(74) Representative: Carpintero Lopez, Francisco et al
Herrero & Asociados, S.L.
Alcalá 35
28014 Madrid (ES)

(54) **Bioinspired system for image processing**

(57)    Bioinspired method for digital image processing implementable in a computer, with an ordered architecture that emulates the functions of photoreceptors, horizontal cells, bipolar cells and ganglion cells of a primate retina, from an original digital image received by means of an input of data, and analyses it by detecting edges and luminous and colorimetric properties of the surfaces present in said original digital image, providing a information output defined for each pixel of the original digital image, made up of a set of data that is representative of the edges and surfaces of the original digital image; which comprises photoreceptor emulators that emulate photoreceptor cells and connected to the data input; horizontal emulators that emulate horizontal cells and each connected to at least one of the photoreceptor emulators; bipolar emulators that emulate bipolar cells and each connected to a plurality of horizontal emulators and to a plurality of photoreceptor emulators; and ganglion emulators that emulate ganglion cells and each connected to a plurality of bipolar emulators and to a data output, each emulator comprising a cellular base structure with a modulated data input, a calculation centre to process the modulated data and an output of the data processed by the calculation centre, and the emulators forming a virtual retina in which each emulator is parametrised.

EP 2 487 627 A1

FIG. 6

**Description**

## TECHNICAL FIELD OF THE INVENTION

The present invention is encompassed within the technical field of systems for image processing and interpretation.

## BACKGROUND OF THE INVENTION

The retina is a highly complex organ. Up to the present, inventors have not known of a proposal that models it in its entirety, but only models that look at one or more of the following issues:

- Connection structure.
- Nature of the connections.
- Temporal behaviour.
- Achromatic and chromatic pathways.

Many models make proposals on the structure and nature of the retina connections. These models aim attempt to define what could be labelled as the retina architecture or design.

The structure of known models begins in the photoreceptor layer. Some proposals model it as a square mesh (as a conventional image), an hexagonal mesh [R. SIMINOFF. "SIMULATED BIPOLAR CELLS IN FÓVEA OF HUMAN RETINA" BIOLOGICAL CYBERNETICS , 64, PP 497- 504 1991. 497- 504 1991, HEAR_95], by means of random models [H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006] or based on real retina samples [D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007]. Horizontal and bipolar cells are found in the second layer. Some of the models place opponency processes in this layer [R.SIMINOFF. "SIMULATED BIPOLAR CELLS IN FÓVEA OF HUMAN RETINA" BIOLOGICAL CYBERNETICS, 64, PP. 497- 504 1991], although others attribute it to the amacrine cell effect [D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007]. Some models, after this stage, include the amacrine cell layer. Finally, ganglion cells are situated in the last stage.

Regarding this structure, there are models that specify the number of connections between the different types of cells, such as in H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, HENN_02, H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381.

2006, M. SAĞLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008 and S. SHAH, M. D. LEVINE. "VISUAL INFORMATION PROCESS IN THE PRIMATE CONE PATHWAYS PART I MODEL" IEEE TRANSACTIONS ON SYSTEMS, MAN AND CYBERNETICS - PART B CYBERNETICS, VOL 26, N°2, PP. 259- 274. 1996. Additionally, different subtypes can be found within each of these types of cells, such as: type On and Off cells [M. SAĞLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008], different types of ganglion, amacrine and bipolar cells [D. BALYA, B. ROSKA, T. ROSKA, F.S. WERBLIN. "A CNN FRAMEWORK FOR MODELING PARALLEL PROCESSING IN A MAMMALIAN RETINA" INTERNATIONAL JOURNAL OF CIRCUIT THEORY AND APPLICATIONS N°30 PP. 363-393. 2002], ganglion type P and M [H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006], midget bipolar and diffuse and ganglion type P and M [S. SHAH, M. D. LEVINE. "VISUAL INFORMATION PROCESS IN THE PRIMATE CONE PATHWAYS PART I MODEL" IEEE TRANSACTIONS ON SYSTEMS, MAN AND CYBERNETICS - PART B CYBERNETICS, VOL 26, N°2, PP. 259- 274. 1996] or midget, parasol and bistratified ganglion cells [J. H. VAN HATEREN, L. RUTTIGER, H. SUN, B. B. LEE. "PROCESSING OF NATURAL TEMPORAL STIMULI BY MACAQUE RETINAL GANGLION CELLS" THE JOURNAL OF NEUROSCIENCE, VOL 22 (22) 5, PP. 9945-9960. 2002].

On an architecture with different levels of detail, the cells that make them up are characterized. Each cell is described according to its spatial and, at times, temporal behaviour. The most usual spatial models consist in the combination of Gaussians of different sizes and amplitudes. [W. RODIECK. "QUANTITATIVE ANALYSIS OF CAT RETINAL GANGLION CELL RESPONSE TO VISUAL STIMULI". VISION RESEARCH, 5, PP. 583-601. 1965, D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007, XU_02, WOHR_08, HENN_02]. There are other proposals such as the Mexican Hat [M. SAǦLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008] or the use of Gaussian derivatives [GHOS_08].

The set of stimuli that reach the cell's receptive field (x and y axis) are integrated in a weighted manner in terms of their position in the receptive field and of the function that models its behaviour. This is expressed in the following manner:

$$\text{Cell total stimulus} = \int_{\text{Cell receptive field}} f_{\text{spatial model}}(x, y) * \text{Stimulus}(x, y) \qquad (\text{eq. 1})$$

The cell's temporal behaviour allows linking the neurophysiological measurements directly to the results of the model in dynamic processes, although this entails substantially increasing their complexity (usually the overall complexity is reduced by simplifying other aspects of the model). The temporal models work on equations with partial derivatives that include feedback and feedforward components. The most common strategies in models with temporary components are: integrate and fire models (IF) and lineal-non lineal models (LN) (see [C. KOCH. "BIOPHYSICS OF COMPUTATION" OXFORD UNIVERSITY PRESS. 1999] for a summary).

Although the above models are applied to different cell types, in the case of photoreceptors, specific functions are used such as photoreceptor signal compression based on the equations of Naka-Rushton and Valeton and Van Norren, where the exponential factors and the constants are adjusted [SHAH_96, SAGL_08, VALB_08, KUNK_09. SHAH, M. D. LEVINE. "VISUAL INFORMATION PROCESS IN THE PRIMATE CONE PATHWAYS PART I MODEL" IEEE TRANSACTIONS ON SYSTEMS, MAN AND CYBERNETICS - PART B CYBERNETICS, VOL 26, N°2, PP. 259-

274. 1996, M. SAǦLAM, Y. HAYASHIDA, N. MURAYAMA. "A RETINAL CIRCUIT MODEL ACCOUNTING FOR WIDE-FIELD AMACRINE CELLS" COGNITIVE NEURODYNAMICS VOL 3 N1 PP. 25-32. 2008, A. VALBERG, T. SEIM. "NEURAL MECHANISMS OF CHROMATIC AND ACHROMATIC VISION" COLOR RESEARCH & APPLICATION, VOL 33, I 6, PP. 433- 443. 2008, T. KUNKEL T, E. REINHARD. "A NEUROPHYSIOLOGY-INSPIRED STEADY-STATE COLOR APPEARANCE MODEL" JOSA A, VOL. 26, ISSUE 4, PP. 776-782. 2009].

The most common functions in the stage of connection of cell layers are the weighted sum and subtraction of signals. However, some authors [K. A. ZAGHLOUL. "OPTIC NERVE SIGNALS IN A NEUROMORPHIC CHIP I: OUTER AND INNER RETINA MODEL" IEE TRANSACTIONS ON BIOMEDICAL ENGINEERING, V 51, N 4, 2004, S. GROSSBERG S, E. MINGOLLA, J. WILLIAMSON. "SYNTHETIC APERTURE RADAR PROCESSING BY A MULTIPLE SCALE NEURAL SYSTEM FOR BOUNDARY AND SURFACE REPRESENTATION" NEURAL NETWORKS. VOL 8, IS. 7-8, PP. 1005 - 1028. 1995, F. J. DÍAZ-PERNAS, ANTÓN-RODRIGUEZ, J. F. DÍEZ-HIGUERA, M. MARTÍNEZ-ZARZUELA. "A BIO-INSPIRED NEURAL MODEL FOR COLOUR IMAGE SEGMENTATION" ANNPR 2008, LNAI 5064, PP. 240-251. 2008] use division as the shunt inhibition or gain inhibition model that were previously described and used in other applications [CARANDINI , D.J. HEEGER. "SUMMATION AND DIVISION BY NEURONS IN PRIMATE VISUAL CORTEX" SCIENCE 264. PP 1333- 1336. 1994, D. J. HEEGER D. J., SIMONCELLI E. P., MOVSHON J. A. " COMPUTATIONAL MODELS OF CORTICAL VISUAL PROCESSING". PROCEEDINGS OF THE NATIONAL ACADEMY OF SCIENCES, PP 93, 623-627 1996, V. TORRE, T. POGGIO. "A SYNAPTIC MECHANISM POSSIBLY UNDERLYING DIRECCIONAL SELECTIVITY TO MOTION" PROC. ROY. SOC LOND. B 202, PP. 409-416. 1978].

Nervous spikes are produced as the output of ganglion cells. The most usual transformation functions to nervous spikes are through exponential functions [J. W PILLOW, J. SHLENS, L. PANINSKI, A. SHER, A. M. LITKE, E. J. CHICHILNISKY, E. P. SIMONCELLI. "SPATIO-TEMPORAL CORRELATIONS AND VISUAL SIGNALLING IN A COMPLETE NEURONAL POPULATION" NATURE, VOL 454, PP. 995-999. 2008], Poisson process or Gamma distributions [MEISTER M, BERRY MJ 2ND. "THE NEURAL CODE OF THE RETINA". NEURON., 22(3) PP. 435-50.1999].

Generally, retina models that have been developed up to date are focused on achromatic components. In the case of the different colour retina models they entail variable abstraction levels on a physiological reality. Among these models three types can be distinguished:

- Models that include chromatic pathways as an extrapolation of the behaviour of achromatic components and that generally are represented as an opponency pathway red vs. green [D.S. LEBEDEV, D.W. MARSHACK. "AMACRINE CELL CONTRIBUTIONS TO RED-GREEN COLOR OPPONENCY IN CENTRAL PRIMATE RETINA: A MODEL STUDY." VISUAL NEUROSCIENCE 24, PP. 535-547. 2007, BARR_96] and additionally another yellow vs. blue [R. SIMINOFF. "SIMULATED BIPOLAR CELLS IN FÓVEA OF HUMAN RETINA" BIOLOGICAL CYBERNETICS, 64, PP. 497- 504 1991, A. VALBERG, T. SEIM. "NEURAL MECHANISMS OF CHROMATIC AND ACHROMATIC VISION" COLOR RESEARCH & APPLICATION, VOL 33, I 6, PP. 433- 443. 2008, ANDR_03, F. J. DÍAZ-PERNAS, ANTÓN-RODRIGUEZ, J. F. DÍEZ-HIGUERA, M. MARTÍNEZ-ZARZUELA. "A BIO-INSPIRED NEURAL MODEL FOR COLOUR IMAGE SEGMENTATION" ANNPR 2008, LNAI 5064, PP. 240-251. 2008, J. H. VAN HATEREN, L. RUTTIGER, H. SUN, B. B. LEE. "PROCESSING OF NATURAL TEMPORAL STIMULI BY MACAQUE RETINAL GANGLION CELLS" THE JOURNAL OF NEUROSCIENCE, VOL 22 (22) 5, PP. 9945-9960. 2002].
- The theoretical proposals where a cell connection scheme is proposed in order to reproduce cell features that are observed in physiological experiments. The majority include post-retina stages or either in the LGN and the cortex [H. MOMIJI H., A. A. BHARATH, M. W. HANKINS, C. KENNARD. "NUMERICAL STUDY OF SHORT-TERM AFTERIMAGES AND ASSOCIATE PROPERTIES IN FÓVEAL VISION" VISION RESEARCH, 46, PP. 365-381. 2006, MICH_78, A. VALBERG, T. SEIM. "NEURAL MECHANISMS OF CHROMATIC AND ACHROMATIC VISION" COLOR RESEARCH & APPLICATION, VOL 33, I 6, PP. 433- 443. 2008].
- Mixed models that include a bioinspired part and another of colour attribute calculations without a direct basis on anatomical or physiological measurements [GUTH_91, T. KUNKEL T, E. REINHARD. "A NEUROPHYSIOLOGY- INSPIRED STEADY-STATE COLOR APPEARANCE MODEL" JOSA A, VOL. 26, ISSUE 4, PP. 776-782. 2009, RUDE_98].

On the other hand, at present, most capture and visualisation digital systems work with red (R), green (G) and blue (B) colour components. However, human beings analyse colours mainly through their hue (H), saturation (S) and intensity (I), as for example dark orange colour. There are multiple transformations between both spaces of representation, which, as a general rule, have been developed for the comparison or measurement of one or two colours in highly controlled environments.

Not being able to compare two colours reliably means, on the one hand, not having stability in the segmentation of objects due to colour and on the other, having great difficulty when tracking elements in image or video sequence.

Sight is one of the senses, if not the sense, that provides most information to human beings. Machine vision arose as the field of knowledge that aims to automate image processing and its recognition. Bio-computational works that are currently being carried out in this field are focusing on the analysis of a hierarchical sequence of the processes that living beings perform. In order to carry out this analysis, within the computational focus, the following lines are being worked on:

- Measurement and study of the visual signal: modulation, intensity, activation times [L. M. MARTINEZ. "THE GENERATION OF VISUAL CORTICAL RECEPTIVE FIELDS." PROGRESS IN BRAIN RES. 154, 2006, G.Q. BI AND M.M. POO. "SYNAPTIC MODIFICATIONS IN CULTURED HIPPOCAMPAL NEURONS: DEPENDENCE ON SPIKE TIMING, SYNAPTIC STRENGTH, AND POSTSYNAPTIC CELL TYPE". J. NEUROSCI., 18. 1998, M. C. BOOTH AND E. T. ROLLS. "VIEW-INVARIANT REPRESENTATIONS OF FAMILIAR OBJECTS BY NEURONS IN THE INFERIOR TEMPORAL VISUAL CORTEX". CEREB. CORTEX, 8, 1998, G. KREIMAN, C.P. HUNG, A. KRASKOV, R.Q. QUIROGA, T. POGGIO AND J.J. DICARLO. "OBJECT SELECTIVITY OF LOCAL FIELD POTENTIALS AND SPIKES IN THE MACAQUE INFERIOR TEMPORAL CORTEX". NEURON, VOL. 49, 2006].
- Analysis of the models and activation areas when facing different controlled stimuli [G. KREIMAN, C.P. HUNG, A. KRASKOV, R.Q. QUIROGA, T. POGGIO AND J.J. DICARLO. "OBJECT SELECTIVITY OF LOCAL FIELD POTENTIALS AND SPIKES IN THE MACAQUE INFERIOR TEMPORAL CORTEX". NEURON, VOL. 49, 2006, HIRS_06, M. C. BOOTH AND E. T. ROLLS. "VIEW-INVARIANT REPRESENTATIONS OF FAMILIAR OBJECTS BY NEURONS IN THE INFERIOR TEMPORAL VISUAL CORTEX". CEREB. CORTEX, 8, 1998].
- Modelling of the processing channels and processing pathways: movement detection, location of objects present in a scene, object recognition, colour evaluation, etc. [G. KREIMAN, C.P. HUNG, A. KRASKOV, R.Q. QUIROGA, T. POGGIO AND J.J. DICARLO. "OBJECT SELECTIVITY OF LOCAL FIELD POTENTIALS AND SPIKES IN THE MACAQUE INFERIOR TEMPORAL CORTEX". NEURON, VOL. 49, 2006, T. SERRE, L. WOLF, S. BILESCHI, M. RIESENHUBER AND T. POGGIO. "OBJECT RECOGNITION WITH CORTEX-LIKE MECHANISMS," IEEE TRANSACTIONS ON PATTERN ANALYSIS AND MACHINE INTELLIGENCE, 29, 3, 2007, T. SERRE "LEARNING A DICTIONARY OF SHAPE-COMPONENTS IN VISUAL CORTEX: COMPARISON WITH NEURONS, HUMANS AND MACHINES" 2006, T. SERRE "LEARNING A DICTIONARY OF SHAPE-COMPONENTS IN VISUAL CORTEX: COMPARISON WITH NEURONS, HUMANS AND MACHINES" 2006].

There are studies dealing with colour processing and analysis within the primary information pathway modelling [BURK_06, HUNG_05. C. VAN ESSEN. "PROCESSING OF COLOR, FORM AND DISPARITY INFORMATION IN VISUAL AREAS VP AND V2 OF VENTRAL EXTRASTRIATE CORTEX IN THE MACAQUE MONKEY". J. NEUROSCI., 6(8), PP. 2327-51. 1986, C. P. HUNG , G. K. KREIMAN , T. POGGIO , J. J. DICARLO. "FAST READOUT OF OBJECT IDENTITY FROM MACAQUE INFERIOR TEMPORAL CORTEX." SCIENCE 310, 2005].

## DESCRIPTION OF THE INVENTION

The present invention aims to overcome the inconveniences of the aforementioned state of the art by means of a bioinspired method for digital image processing, implementable in a computer, with an ordered architecture that emulates the functions of photoreceptors, horizontal cells, bipolar cells and ganglion cells of a primate retina, from an original digital image received by means of a data input, and analyzes the image detecting edges and luminous and colorimetric properties of the surfaces present in said original digital image, providing a defined information output for each pixel of the original digital image where the generated output is made up of the set of data that is representative of the edges and surfaces of the original digital image, which is characterised in that

it comprises a plurality of photoreceptor emulators that emulate photoreceptor cells and connected to the data input; a plurality of horizontal emulators that emulate horizontal cells and each connected to at least one of the photoreceptor emulators; a plurality of bipolar emulators that emulate bipolar cells and each connected to a plurality of horizontal emulators and to a plurality of photoreceptor emulators; a plurality of ganglion emulators that emulate ganglion cells and each connected to a plurality of bipolar emulators and to a data output;

each emulator has a cellular base structure with a modulated data input, a calculation centre to process the modulated data and an output of the data processed by the calculation centre;

the emulators make up a virtual retina in which each emulator is parametrised by

a first parameter that is representative of the type of emulators to which it is connected and of its relative weights that are indicative of the contribution of each type of emulator to the input signal received by the emulator to which they are connected,

a second parameter that is representative of an integration radius that is indicative of the circular area of connections of a modulated input, to the emulator by which it receives modulated data from those emulators to which it is connected to in said connection area, and

a third parameter representative of a position of the emulated cell of the primate retina extrapolated to the virtual retina, such that the third parameters make up a set that emulates a cell distribution of the primate retina;

the photoreceptor emulators are comprised in a photoreceptor module in which each of the photoreceptor emulators generates a first output value that represents a chromatic component, from values of the original digital image that are within its integration area;

the horizontal emulators are comprised in a horizontal emulator module in which each of the horizontal emulators generates a second output value from the weighted sum of the first output values generated by the photoreceptor emulators to which it is directly connected to;

the bipolar emulators are comprised in a bipolar emulator module in which each bipolar emulator generates a third output value through a weighted combination of output values generated respectively by the photoreceptor emulators and by the horizontal emulators to which it is connected;

the ganglion emulators are comprised in a ganglion module in which each of the ganglion emulators generates a non-linear transformed fourth output value, from the output values of the bipolar emulators to which it is connected, said fourth output values, which are generated by their respective ganglion emulators, defining a set of differentiated images that are representative of the different morphological and chromatic features of the original digital image.

In accordance with this invention, the input data from each emulator can be modulated based on a Gaussian modulation function. On the other hand, the weighted combination corresponding to the output value generated by at least one of the bipolar emulators can be a weighted sum function or a weighted division function. In turn, the output value of at least one of the ganglion emulators can be generated based on an exponential function.

In an embodiment of the invention, at least some of the type emulators of the same type can be interconnected between each other through interconnections that determine additional input signals to those received from the emulators of another type to which said emulators of the same type are connected.

Preferably, the photoreceptor emulator module comprises photoreceptor emulators selected from emulators of L, M and S type cones and rods, the horizontal emulator module comprises horizontal emulators selected from emulators of HI and HII horizontal cells, the bipolar emulator module comprises bipolar emulators selected from emulators of type R ON, R OFF, G ON and G OFF midget bipolar, type DB1, DB2, DB3, DB4, DB5 and DB diffuse bipolar 6, blue bipolar cells and of bipolar rods, and the ganglion module comprises ganglion emulators selected from emulators of type R ON, R OFF, G ON and G OFF midget ganglion, parasol type ON and OFF, midget bistratified, large sparse type ON and OFF, giant sparse type ON and OFF, Broad Thorny and Narrow Thorny type ON and OFF cells.

According to this embodiment, the emulators of HI horizontal cells can be connected to photoreceptor emulators selected from emulators of type L cones, emulators of type M cones and emulators of rods.

In turn,

- the emulators of midget bipolar cells can be connected to photoreceptor emulators selected from emulators of type L cones and emulators of type M cones and to HI and HII horizontal emulators;
- the emulators of diffuse bipolar cells can be connected to photoreceptors selected from emulators of type L cones, emulators of type M cones and emulators of type S cones and to HI and HII horizontal emulators;
- the emulators of blue bipolar cells can be connected to photoreceptor emulators that emulate type S cones and to HII horizontal emulators;
- the emulators of bipolar cell emulators that emulate bipolar rods can be connected to photoreceptor emulators that emulate rods and HI horizontal cell emulators.

On the other hand,

- the emulators of OFF type midget ganglion cells can be connected to emulators of OFF type midget bipolar cells; the emulators of ON type midget ganglion cells can be connected to emulators of ON type midget bipolar cells; the emulators of OFF parasol type ganglion cells can be connected to bipolar emulators selected from emulators of type DB2 and DB3 diffuse bipolar cells; the emulators of ON parasol type ganglion cells can be connected to bipolar emulators selected from emulators of type DB4 and DB5 diffuse bipolar cells; the emulators of bistratified ganglion cells can be connected to bipolar emulators selected from emulators of type DBB and DB1 bipolar cells; the emulators of OFF type large sparse ganglion cells can be connected to bipolar emulators that emulate type DB1 diffuse bipolar cells; the emulators of ON type large sparse ganglion cells can be connected to bipolar emulators that emulate type DB6 diffuse bipolar cells; the emulators of OFF type giant sparse ganglion cells can be connected to bipolar emulators that emulate type DB1 diffuse bipolar cells; the emulators of ON type giant sparse ganglion cells can be connected to bipolar emulators selected from emulators that emulate type DB6 diffuse bipolar cells; the emulators of Broad Thorny type ganglion cells can be connected to bipolar emulators selected from that emulate type DB2 and DB4 diffuse bipolar cells; the emulators of OFF type Narrow Thorny ganglion cells can be connected to bipolar emulators that emulate type DB2 diffuse bipolar cells; the emulators of ON type Narrow Thorny ganglion cells can be connected to bipolar emulators that emulate type DB4 diffuse bipolar cells;

In accordance with what derives from the above, this invention corresponds to both the design and implementation of a functional retina model. Its structure has been defined and a description has been provided for the connections of each cell type, distribution and size. This has allowed obtaining a set of output pathways from the retina through the signals generated by the ganglion cells, which in biological systems are transmitted via the optic nerve. A method has been determined to allow the calculation of the cell distribution in each layer taking into account the biological overlapping factors. As can be seen from the above, the present invention refers to a system based on an architecture based on a primate retina, as for example a human retina, where the cell layers, number of connections and their nature as well as the spatial characterisation of each cell are determined. This retina structure is based on anatomical and physiological data.

Through the generation of a set of output channels from the retina, through the different type of ganglion cells, the method is capable of analysing different morphological and chromatic properties of the analysed image thus obtaining a set of output signals of the model with specific spatial and chromatic characteristics, this being from models that extrapolate results of the achromatic pathways to chromatic ones or that integrate the idea of centre/ surround opponency in red vs. green and yellow vs. blue channels that are identified as type A models in the section "state of the art prior to the invention" in the present description.

With regard to the theoretical and mixed proposals (identified as type B and C models in the section entitled "State of the art prior to the invention"), the present invention is not limited to a theoretical proposal but constitutes the development of a new image processing method. Furthermore, this invention is not ascribed to only simple or very controlled stimuli but rather admits real images as input. A functional model of the retina has been designed and implemented. Its structure has been detailed and for each cell type its connections, distribution and size have been determined.

This has allowed obtaining a set of output pathways from the retina through the signals that are generated by ganglion cells that are transmitted through the optic nerve.

All this entails that the present invention can be used with real and complex stimuli. This feature is of special relevance for computer vision systems.

As can be derived from the above, the features of the present invention position the system as a tool with great versatility for processes such as:

- Image segmentation, as it provides information on the edges that are present in an image. It obtains the edges that are present not only in achromatic channels (as those that are commonly applied) but also in chromatic channels.
- Object detection, as with the edges and their colour characteristics, pixels which potentially belong to the same object can be grouped.
- Characterisation of the elements present in an image, through their morphological features which can be calculated based on the detected edges and similar colour areas, and on the other hand, through the colour components of the surfaces.
- Object identification: as it has colour attributes that are more stable than usual ones and that adapt themselves to the identification process in images in different contexts.

These characteristics allow its use in specific applications of a very varied nature, as for example, in:

- Video monitoring and security: people and object tracking, people counting, traceability, biometric control applications (face recognition...)
- Quality control in manufacturing processes: control of elements with varied morphologies and/or different finishes (colours, textures...)
- Sport applications: player tracking.
- Biomedical applications: for the identification of the most representative elements in images: cell samples, magnetic resonance imaging (MRI)...

## DESCRIPTION OF THE DRAWINGS

Aspects and embodiments of the invention will be described herein after on the grounds of some drawings, in which

figure 1 is a scheme of the flow of information and connections of a embodiment of the system in accordance with the present invention;

figure 2 shows a block diagram of the embodiment of the system shown in figure 1;

figure 3 schematically shows the design of an embodiment of a cellular base structure of an emulator in accordance with the present invention, with an entry modulated by a Gaussian function, a centre that makes the calculations on the input signals to the system and an output that is homogeneous throughout the whole of its area of influence;

figure 4 schematically shows an embodiment of the definition of the integration radius of an emulator and the set of emulators of the previous layer to which it is connected;

figure 5 is a representation of the overlapping factor of the interconnection of the emulators in layer i, the set of positions making up the distribution or mesh of each cell type;

figure 6 shows examples of images generated by each cell layer emulated by means of the present invention based on the diagram shown in figure 2;

figure 7 shows an example of a flow of information corresponding to the progression of different information pathways in the model on which the method of this invention is based;

figure 8 is a graphical representation of an example of the establishing of pixels of an image from the signal generated by emulators of one same type;

figure 9 shows a connection scheme of an embodiment of the emulator modules in accordance with this invention;

figure 10 is a block diagram which is the scheme of the basic structure of emulators that make up this invention.

## EMBODIMENTS OF THE INVENTION

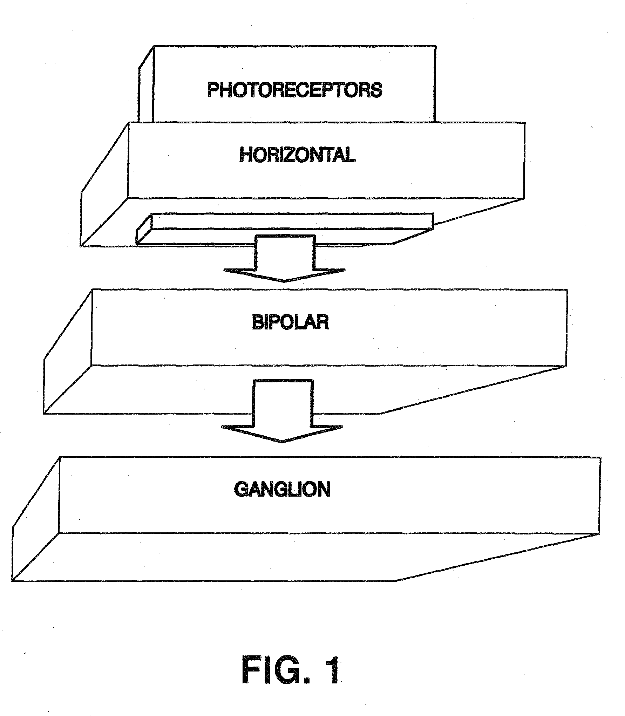

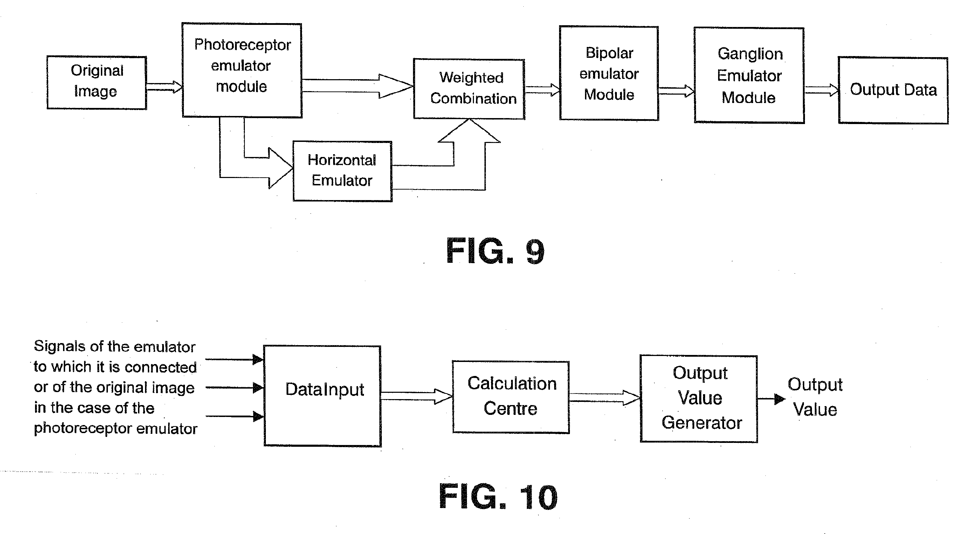

According to the embodiment shown in figures 1 and 9, the image processing method based on a bioinspired retina model is formed of an ordered architecture that is filled with emulator modules of different cell types, namely photoreceptor, horizontal, bipolar and ganglion cell modules. The output signals of the different layers will be calculated through the weighted sum of the input signals to each layer.

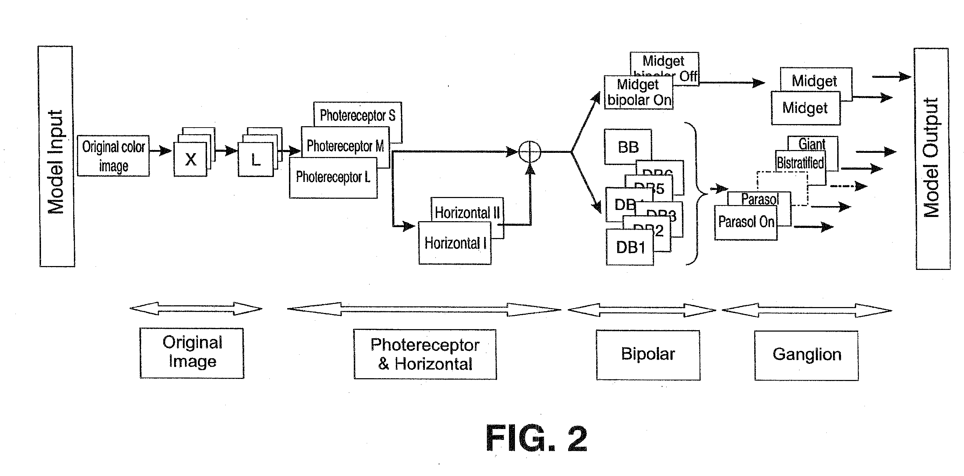

As shown in figure 2, the different types of cells have been placed, configured and connected on this architecture, namely:

a) Photoreceptor cells:

    a. Cones: L, M and S types.
    b. Rods.

b) Horizontal cells:

    a. HI.
    b. HII.

c) Bipolar cells:

    a. Midget bipolar

        i. ON type: R and G type.
        ii. OFF type: R and G type.

    b. S cone bipolar, BB.
    c. Diffuse bipolar.

        i. OFF type:

          - DB1.
          - DB2.
          - DB3.

        ii. ON type:

          - DB4.
          - DB5.
          - DB6.

    d. Rod bipolar.

d) Ganglion cells:

    a. Midget ganglion cells:

        i. ON type: R and G type.
        ii. OFF type: R and G type.

    b. Parasol cells:

        i. ON type.
        ii. OFF type.

    c. Bistratified cells.
    d. Large sparse bistratified cells.

        iii. ON type.
        iv. OFF type.

    e. Giant ganglion cells.
    f. Broad thorny cells
    g. Narrow thorny cells

v. ON type.

vi. OFF type.

When wishing to calculate the signal of a type j cell, first, the total signal generated by the type i cells that connect to said type j cell is calculated, each weighted by a Gaussian factor that represents the distance of said connection to the centre of the type j cell. Second, the sum of all types of cells that connect with the type j that is going to be calculated, is calculated, the weight factor is established according to the relative number of connections of each type with the type j cell. The equation that describes this is the following:

$$Signal_{Cell\,type\,j} = \sum_{\substack{\forall\,Cell\,connected \\ to\,the\,cell \\ type\,j}} w_{Cell\,type\,i\,over\,cell\,type\,j} \sum_{\substack{\forall\,cell\,type\,i \\ in\,the\,integration\,field \\ of\,the\,cell\,type\,j}} w(relative\ position\ i,j)_{Gaussian} * Signal_{Cell\,type\,i}$$

(eq. 2)

The weights of the sums are determined according to the two methods described for the calculation of parameters 1 to 3.

In the case of the connection between the photoreceptors with the horizontal and bipolar cells, two possibilities can be worked with. The first is the weighted sum where the signal of horizontal cells is subtracted from that of the photoreceptor signal (negative weights in equation 2) and the second is by means of of a shunt or divisive inhibition. This function is calculated in the following manner. As in the previous case, when calculating the signal of a type j cell. The total signal that reaches said cell (exactly as described in the earlier case) from the type i cells (excitatory signal) and type k cells (inhibitory signal) is calculated. Both signals are divided and a gain factor is applied. The calculation is gathered in the following equation:

$$Signal_{Cell\,type\,j} = w_{divisive\,factor\,for\,type\,j} \frac{\sum_{\substack{\forall\,Cell\,type\,i\,in\,the\,integration \\ field\,of\,the\,cell\,type\,j}} w(relative\ position\ i,j)_{Gaussiana} * Signal_{Cell\,type\,j}}{\sum_{\substack{\forall\,Cell\,type\,i\,in\,the\,integration \\ field\,of\,the\,cell\,type\,k}} w(relative\ position\ k,j)_{Gaussian} * Output_{Cell\,type\,k}}$$

(eq. 3)

where j corresponds to bipolar cells, i to photoreceptors and k to horizontals.

The on and off pathways of the model are separated in the bipolar cell stage. The following function is used for this:

$$Signal_{bipolar\,on} = Signal_{bipolar\,input} - \overline{Signal}_{bipolar\,input}$$  (eq. 4)

$$Signal_{bipolar\,off} = \overline{Signal}_{bipolar\,input} - Signal_{bipolar\,input}$$  (eq. 5)

where the x symbol represents the average value of a variable x.

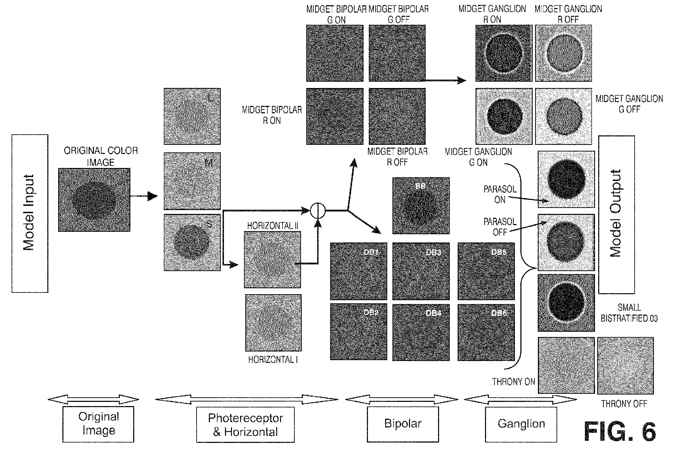

On the other hand, an exponential function has been used in the example case in figure 6 for the conversion signal of the continuous signals towards nervous spikes.

$$f(x) = A \cdot e^{B \bullet x}$$  (eq. 6)

However, equation 6 can be replaced by other generic functions for the generation of spikes.

On the other hand, each cell receives weighted signals from some of the types present in the previous layer. The following are the connections established between the emulators of the different cell types.
• Horizontal cells:

Table 1. Connections between horizontal cell and photoreceptors emulators

| Horizontal | HI | HII |
|---|---|---|
| Photoreceptor | Type L and M cones Rods | Type L, M and S cones |

• Bipolar cells:

Table 2. Connections between bipolar cell, photoreceptor and horizontal cell emulators

| Bipolar | Midget | Diffuse | | | | | | Blue | Rods |
|---|---|---|---|---|---|---|---|---|---|
| | | DB1 | DB2 | DB3 | DB4 | DB5 | DB6 | | |
| Photoreceptor | L or M cones I and II Horizontal | L, M and/or S cones I and II Horizontal | | | | | | S cones II Horizontal | Rods I Horizontal |

• Ganglion cells:

Table 3. Connections between ganglion and bipolar cell emulators

| Ganglion | Midget | | Parasol | | Bistratified | Large sparse | | Giant sparse | | Broad thorny | Narrow Thorny | |
|---|---|---|---|---|---|---|---|---|---|---|---|---|
| | Off | On | Off | On | | Off | On | Off | On | | Off | On |
| Bipolar | Midget Off type | Midget Off type | DB2 DB3 | DB4 DB5 | DB1 BB | DB1 | DB6 | DB1 | DB6 | DB2 DB4 | DB2 | DB4 |

This method allows analysing an image through multiple information pathways that obtain, in a parallel manner, different morphological characteristics (edges of the elements as present in the image) and chromatic characteristics

(colour that characterise each image point). Figure 2 shows these information pathways that have the following characteristics:

- Midget ganglion cells: cells with spatial opponency of chromatic nature: centre vs. surround.
- Parasol ganglion cells: cells with spatial opponency of achromatic type: centre vs. surround.
- Small bistratified ganglion cells: cells with spatial opponency of chromatic nature: centre vs. surround.
- Big ganglion cells: cells with opponency centre vs. surround with achromatic nature.

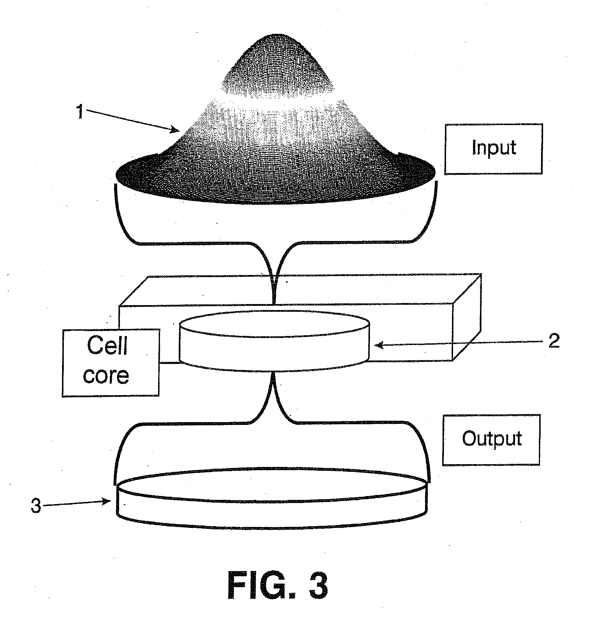

According to what is shown by figure 3, in the design of the system a cellular base structure has been determibed with an entry -1- modulated by a Gaussian function based on the following equation:

$$\text{Cell total stimulus} = \int_{\text{Cell receptive field}} f_{\text{spatial model}}(x,y) * \text{Stimulus}(x,y)$$

(eq. 7)

(already shown above as equation 1), a centre -2- that makes calculations on the input signals of the model and an output -3- that is homogeneous throughout its area of influence.

As can be seen in figure 3, this cellular base structure of the emulators entails that the emulator receives, through its data input -1-, signals from other emulators to which it is connected or in the case of a photoreceptor cell emulator, of the original digital image that is in its area of influence.

The Gaussian type input signal means that each input signal to the cell has a different weight based on the distance to the centre of the area of integration of the cell. The weight is determined by means of a Gaussian function. The set of signals that reach the area of influence of the cell, which is named integration field, is added (integrated) to generate the total input signal to the cell. (In figure 3, upper area -1- the Gaussian function where the centre has greater weight than the surround is shown). Each cell has a set of output arbours that represent the set of connections that it establishes with the subsequent layer. In all of these connections, irrespective of their positions, the generated output signal has the same value, that is, it is constant.

With this element as its constituent unit, the bioinspired model of the retina has been built. This model is characterised by a set of parameters which entails that each type of cell present in each layer of the model is characterised by:

**Parameter type 1.** Cell types to which it is connected and their relative weights which indicate the contribution of each cell type to the input signal to the cell to which they connect.

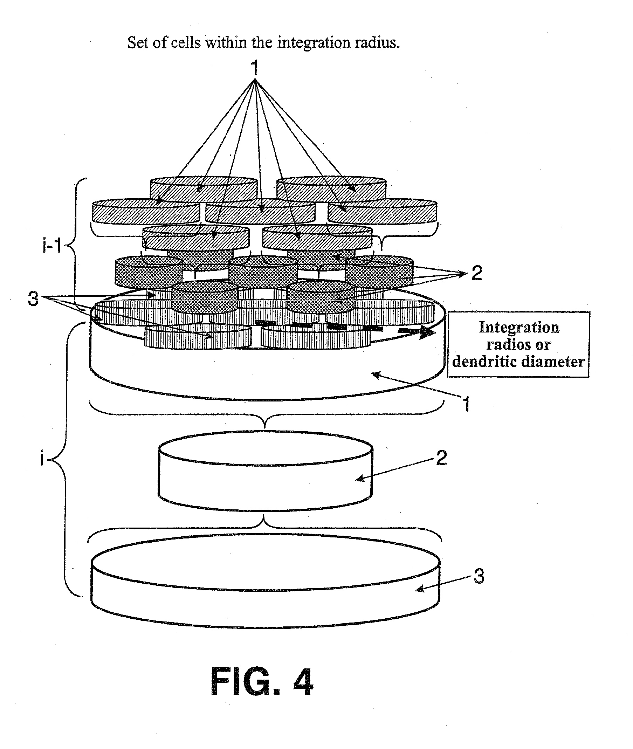

**Parameter type 2.** Integration radius: it indicates the circular area within which it establishes the connections with the cells of the preceding layer that are its inputs. Figure 4 shows a connection schematic diagram of a cell and the set of cells to which it connects in the immediately preceding layer. Each cell is represented following the schematic diagram shown in figure 3, with its input areas -1-, the core -2- and the outputs -3-.

**Parameter type 3.** Cell distribution or mesh. Each cell is placed in a specific position within the xy plane of the retina: {$x_{cell}$,$y_{cell}$}. The z coordinate marks the depth within the retina where each cell type is located. The set of cell positions that belong to a same cell type constitute the distribution or mesh. This parameter is defined by the cell density and/or the overlapping factor, which is the number of cells of a certain type that sample a point in the retina.

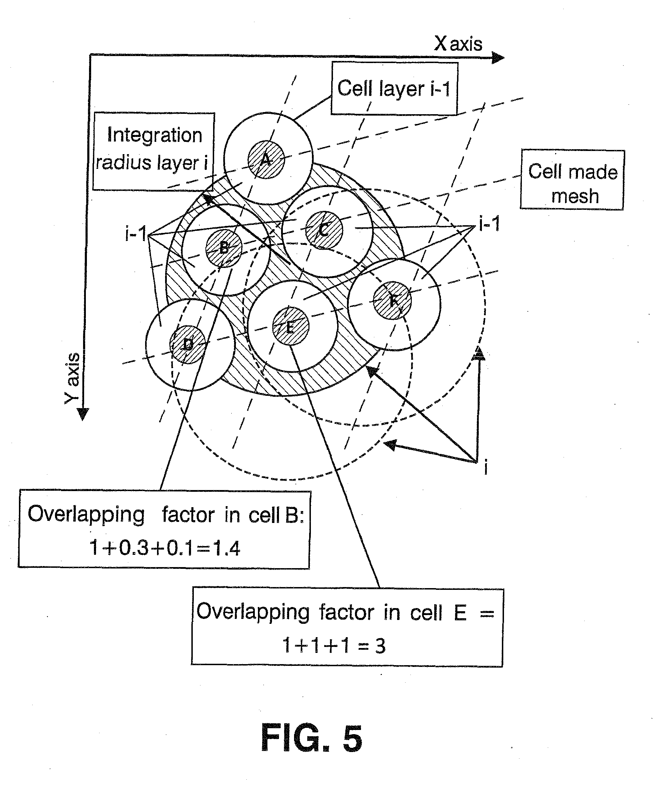

Figure 5 shows an example of the relationship between the overlapping factor and the positions (mesh) of two types of cells in consecutive layers. A set of type i-1 cells (i-1 circles) and a sample of type i cells (i circles) are represented. It is noteworthy to mention that the mesh admits other types of configurations: rectangular, hexagonal, variable, etc.

In order to be able to calculate the parameters of the cell mesh with an overlapping factor different to 1, an overlapping (or coverage) function is determined as the sum of the area that each of the cells of the layer to be calculated overlaps the cells in the next layer, normalised through the division by the area of the cell to be calculated:

$$\text{Overlapping factor}_{j} = \frac{\sum_{\forall \text{Cell in layer } j-1} \text{Area}_{\text{Overlapped}}}{\text{Area}_{\text{Céll } j}}$$

(eq. 8)

A function to be optimised can be established in order to obtain the values for each mesh and its overlapping factor. As an example of an embodiment of this invention, the aim is that the overlapping is optimally uniform around the real anatomical value. For this, the maximum and minimum overlapping values in the set of type j cells are measured and are compared with the real value. In this way, the variation band of the values of the overlapping factor is delimited.

$$f_j^{OPTIMUS} = abs(Overlapping\ factor_j^{MAX} - Overlapping\ factor_j^{REAL}) +$$
$$abs(Overlapping\ factor_j^{REAL} - Overlapping\ factor_j^{MIN})$$

(eq. 9)

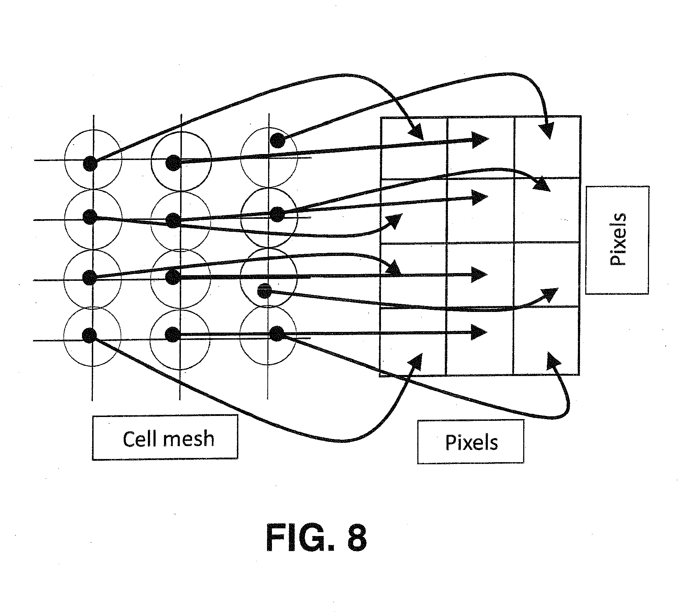

This analysis method produces a complete image in each cell stage. As each cell of the layer generates a signal and has a position within its layer, an image (set of values with spatial relations in a plane) is created when each generated signal is placed in its position. This fact is graphically shown in figure 8 wherein the the cell mesh is shown in the left part, the cell centres are represented in grey, while the right there are the pixels of an image. The arrows show how each cell represents the values of each pixel of the image.

There are two possibilities to calculate these parameters:

- Estimate of the parameters based on biological data.
  Compiling existing biological data in scientific publications and estimating those that are not available.
  The number of connections with the immediately superior layer will be used in order to be able to establish the size of the dendritic fields of the different cells. Thereby and based on the receptive fields of the photoreceptors as a reference unit, the fields of the remaining fields can be calculated. The available information sources for this calculation are:

  - Dendritic field or integration field: physical size of the dendritic arbours.
  - Receptive field: size of the stimulus with influence in the cell. It is larger than the dendritic field as it includes the effect of interneuron connections both in the same layer as well as in previous layers.
  - Number of connections with the cells in the previous layers (its receptive field can be established if one knows this information plus the cell distribution in the previous layer).

The overlapping factor, which is the number of same-type cells that sample a point in the retina, will be used in order to calculate the distribution. An additional data is the number of cells of each type which can complement other data.

- Estimate of the parameters based on optimisation criteria.
  A target function to be optimised is established (edge detection, colour evaluation, generation of Gabor filters...) and the values of the parameters that generate the optimum results for said optimisation function are calculated.

The following characteristics are obtained for the main associated channels and functions when estimating the parameters based on biological data:

Photoreceptors: cells with a homogeneous receptive field (without opponency) and chromatic nature.

$$Photoreceptor\ type\ L = \int_{\substack{Integration\ field \\ of\ the\ photoreceptor}} \exp(-2*(x^2+y^2)/15^2)*L\ plane\ of\ the\ image(x,y)$$

(eq.10)

$$Photoreceptor\ type\ M = \int_{\substack{Integration\ field \\ of\ the\ photoreceptor}} \exp(-2*(x^2+y^2)/15^2)*M\ plane\ of\ the\ image(x,y)$$

(eq. 11)

$$\text{Photoreceptor type S} = \int\limits_{\substack{\text{Integration field} \\ \text{of the photoreceptor}}} \exp(-2*(x^2+y^2)/15^2)*\text{S plane of the image(x,y)}$$

$$(eq.12)$$

Horizontal cells: cells with a homogeneous receptive field (without presenting opponency) and with a partially achromatic nature.

$$\text{Horizontal type I} = \int\limits_{\substack{\text{Integration field of} \\ \text{horizontal cell type I}}} \exp(-2*(x^2+y^2)/41.23^2)* \begin{Bmatrix} 0.615*\text{L Photoreceptor signal} \\ +0.385*\text{M Photoreceptor signal} \end{Bmatrix}$$

$$(eq.\ 13)$$

$$\text{Horizontal tipo II} = \int\limits_{\substack{\text{Integration field of} \\ \text{horizontal cell type II}}} \exp(-2*(x^2+y^2)/62.45^2)* \begin{pmatrix} 0.307*\text{L Photoreceptor signal} \\ +0.193*\text{M Photoreceptor signal} \\ +0.5*\text{S Photoreceptor signal} \end{pmatrix}$$

$$(eq.\ 14)$$

Midget bipolar cells: cells with centre opponency vs. surround with chromatic nature.

a) Subtraction mode

$$\text{Midget bipolar R} = \int\limits_{\substack{\text{Integration field of} \\ \text{the midget bipolar cell}}} \exp(-2*(x^2+y^2)/10^2)* \begin{pmatrix} \text{L Photoreceptor signal} \\ -0.6*(0.8*\text{Horizontal I Signal}+0.2*\text{Horizontal II Signal}) \end{pmatrix}$$

$$(eq.\ 15)$$

$$\text{Midget bipolar G} = \int\limits_{\substack{\text{Integration field of} \\ \text{the midget bipolar cell}}} \exp(-2*(x^2+y^2)/10^2)* \begin{pmatrix} \text{M Photoreceptor signal} \\ -0.6*(0.8*\text{Horizontal I Signal}+0.2*\text{Horizontal II Signal}) \end{pmatrix}$$

$$(eq.\ 16)$$

b) Division mode

$$\text{Midget bipolar R} = \int\limits_{\substack{\text{Integration field of} \\ \text{the midget bipolar cell}}} \exp(-2*(x^2+y^2)/10^2)*0.6 \left( \frac{\text{L Photoreceptor signal}}{(0.8*\text{Horizontal I Signal}+0.2*\text{Horizontal II Signal})} \right)$$

$$(eq.\ 17)$$

$$\text{Midget bipolar G} = \int\limits_{\substack{\text{Integration field of} \\ \text{the midget bipolar cell}}} \exp(-2*(x^2+y^2)/10^2)*0.6 \left( \frac{\text{M Photoreceptor signal}}{0.8*\text{Horizontal I Signal}+0.2*\text{Horizontal II Signal}} \right)$$

$$(eq.\ 18)$$

In both modes, the On and Off types are calculated as follows:

$$\text{Midget bipolar R On} = \text{Midget bipolar } R - \overline{\text{Midget bipolar } R} \qquad \text{(eq. 19)}$$

$$\text{Midget bipolar R Off} = \overline{\text{Midget bipolar } R} - \text{Midget bipolar } R \qquad \text{(eq. 20)}$$

$$\text{Midget bipolar G On} = \text{Midget bipolar } G - \overline{\text{Midget bipolar } G} \qquad \text{(eq. 21)}$$

$$\text{Midget bipolar G Off} = \overline{\text{Midget bipolar } G} - \text{Midget bipolar } G \qquad \text{(eq. 22)}$$

Diffuse bipolar cells: cells with opponency centre vs. surround with achromatic nature.

a) Subtraction mode

$$\text{Bipolar DBX} = \int_{\substack{\text{Integration field}\\ \text{of the difusse}\\ \text{bipolar DBX}}} \exp(\frac{-2*(x^2+y^2)}{DifusseRadiusX^2})* \begin{pmatrix} [0.572*\text{L Photoreceptor Signal} - 0.6*(0.8*\text{Horizontal I Signal} + 0.2*\text{Horizontal II Signal})] \\ +[0.358*\text{M Photoreceptor Signal} - 0.6*(0.8*\text{Horizontal I Signal} + 0.2*\text{Horizontal II Signal}) \\ [0.07*\text{S Photoreceptor Signal} - 0.6*(\text{Horizontal II Signal})] \end{pmatrix}$$

$$\text{(eq. 23)}$$

b) Division mode

$$\text{Bipolar DBX} = \int_{\substack{\text{Integration field}\\ \text{of the difusse}\\ \text{bipolar DBX}}} \exp(\frac{-2*(x^2+y^2)}{DifusseRadiusX^2})*0.6* \begin{pmatrix} [0.572*\text{L Photoreceptor Signal}/(0.8*\text{Horizontal I Signal} + 0.2*\text{Horizontal II Signal})] \\ +[0.358*\text{M Photoreceptor Signal}/(0.8*\text{Horizontal I Signal} + 0.2*\text{Horizontal II Signal}) \\ [0.07*\text{S Photoreceptor Signal}/(\text{Horizontal II Signal})] \end{pmatrix}$$

$$\text{(eq. 24)}$$

Where X= {1..6}. The integration radii are different for each type of diffuse bipolar cell DB1=24.29; DB2=25.29; DB3=30; DB4=26.92; DB5= 25.69; DB6=31.62.
Finally, the signals of the different subtypes of diffuse bipolar cells are calculated.

$$\text{Diffuse Bipolar DB1} = \overline{Bipolar\ DB1} - Bipolar\ DB1 \qquad \text{(eq. 25)}$$

$$\text{Diffuse Bipolar DB2} = \overline{Bipolar\ DB2} - Bipolar\ DB2 \qquad \text{(eq. 26)}$$

$$\text{Diffuse Bipolar DB3} = \overline{Bipolar\ DB3} - Bipolar\ DB3 \qquad \text{(eq. 27)}$$

$$\text{Diffuse Bipolar DB4} = Bipolar\ DB4 - \overline{Bipolar\ DB4} \qquad \text{(eq. 28)}$$

$$\text{Diffuse Bipolar } DB5 = \textit{Bipolar DB5} - \overline{\textit{Bipolar DB5}} \qquad \text{(eq. 29)}$$

$$\text{Diffuse Bipolar } DB6 = \textit{Bipolar DB6} - \overline{\textit{Bipolar DB6}} \qquad \text{(eq. 30)}$$

<u>Blue bipolar cells: cells with opponency centre vs. surround with chromatic nature.</u>

a) Subtraction mode

$$\text{Blue Bipolar} = \int\limits_{\substack{\text{Integration field} \\ \text{of blue bipolar cell}}} \exp(\frac{-2*(x^2+y^2)}{28.5^2})*(\text{S Photoreceptor Signal} - 0.6*\text{Horizontal II Signal})$$

$$- \overline{\textit{Blue Bipolar}} \qquad \text{(eq. 31)}$$

b) Division mode

$$\text{Blue Bipolar} = \int\limits_{\substack{\text{Integration field} \\ \text{of blue bipolar cell}}} \exp(\frac{-2*(x^2+y^2)}{28.5^2})*0.6\left(\frac{\text{S Photoreceptor Signal}}{\text{Horizontal II Signal}}\right)$$

$$- \overline{\textit{Blue Bipolar}} \qquad \text{(eq. 32)}$$

<u>Midget ganglion cells: cells with spatial opponency of chromatic nature: centre vs. surround.</u>

$$\text{Midget ganglion R On} = 4.27*\exp\left\{1.96*\int\limits_{\substack{\text{Integration field of} \\ \text{midget ganglion cell}}}\exp(-2*(x^2+y^2)/10^2)*\text{Midget bipolar R On}\right\}$$

$$\text{(eq. 33)}$$

$$\text{Midget ganglion R Off} = 4.27*\exp\left\{1.96*\int\limits_{\substack{\text{Integration field of} \\ \text{midget ganglion cell}}}\exp(-2*(x^2+y^2)/10^2)*\text{Midget bipolar R Off}\right\}$$

$$\text{(eq. 34)}$$

$$\text{Midget ganglion G On} = 4.27*\exp\left\{1.96*\int\limits_{\substack{\text{Integration field of} \\ \text{midget ganglion cell}}}\exp(-2*(x^2+y^2)/10^2)*\text{Midget bipolar G On}\right\}$$

$$\text{(eq. 35)}$$

$$\text{Midget ganglion G Off} = 4.27 * \exp\left\{1.96 * \int_{\substack{\text{Integration field of} \\ \text{midget ganglion cell}}} \exp(-2*(x^2+y^2)/10^2)*\text{Midget bipolar G Offf}\right\}$$

(eq. 36)

Parasol ganglion cells: cells with spatial opponency of achromatic nature: centre vs. surround.

$$\text{Parasol ganglion type On} = 4.27 * \exp\left\{1.96 * \int_{\substack{\text{Integration field} \\ \text{of parasol ganglion cells}}} \exp(-2*(x^2+y^2)/62.5^2)*(0.4*\text{Bipolar DB4}+0.6*\text{Bipolar DB5})\right\}$$

(eq. 37)

$$\text{Parasol ganglion type Off} = 4.27 * \exp\left\{1.96 * \int_{\substack{\text{Integration field} \\ \text{of parasol ganglion cells}}} \exp(-2*(x^2+y^2)/62.5^2)*(0.4*\text{Bipolar DB2}+0.6*\text{Bipolar DB3})\right\}$$

(eq. 38)

Small bistratified ganglion cells: cells with spatial opponency of chromatic nature: centre vs. surround.

$$\text{Small bistratified ganglion} = 4.27 * \exp\left\{1.96 * \int_{\substack{\text{Integration field} \\ \text{of small bistratified} \\ \text{cell}}} \exp(-2*(x^2+y^2)/104.2^2)*(0.5\,\text{Difusse Bipoalr DB1}+0.5\,\text{Blue Bipolar})\right\}$$

(eq. 39)

Big ganglion cells: cells with opponency centre vs. surround with achromatic nature.

$$\text{Thorny ganglion type On} = 4.27 * \exp\left\{1.96 * \int_{\substack{\text{Integration field} \\ \text{of thorny ganglion cell}}} \exp(-2*(x^2+y^2)/517^2)*(\text{Bipolar DB4})\right\}$$

(eq. 40)

$$\text{Thorny ganglion type Off} = 4.27 * \exp\left\{1.96 * \int_{\substack{\text{Integration field} \\ \text{of thorny ganglion cell}}} \exp(-2*(x^2+y^2)/517^2)*(\text{Bipolar DB2})\right\}$$

(eq. 41)

The system of analysis shown in the figures creates a complete image in each cell stage. As each cell in a layer generates a signal and has a position within its layer, an image (set of values with spatial relations in a plane)is created when each generated signal is placed in its position .

Figure 6 is a sample image that shows the characteristics of the system as applied to an image. A sample image has been chosen to show the performance of the method, specifically, the effect produced at the edges.

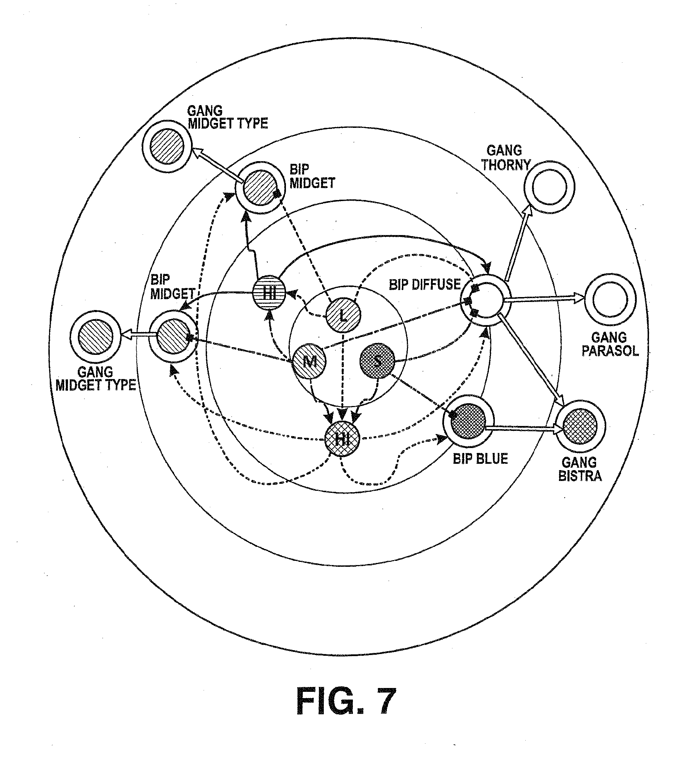

In turn, figure 7 shows the progression of the different information channels, from their origin in the photoreceptors to the ganglion cells. In this figure the information flow is shown and also the pathways that feed the centres are identified (arrows with ♦) and the cell surrounds (arrows with ▶). By means of the information flow represented in figure 7, the connections between the different cell layers and the influence of each type of photoreceptor in each cell type can be seen. As can be observed, in this figure there are represented the processes in opponency (circles with a ring that represent the centre and surround processes in cells that have this type of opponency) as well as colours (L and arrows that start from L = red colour; M and arrows that start from M = green colour; S and arrows that start from S = blue colour) to which each cell type is especially tuned (these colours are formed by the weighted sum of their input signals, see tables 1 to 3 for details on connections and equations 2 to 41 for the weights of each thereof).

**Claims**

1. Bioinspired system for digital image processing implementable in a computer, with an ordered architecture that emulates the functions of photoreceptors, horizontal cells, bipolar cells and ganglion cells of a primate retina, from an original digital image received by means of an input of data, and analyses it, detecting edges and luminous and colorimetric properties of the surfaces present in said original digital image, providing a defined information output for each pixel of the original digital image made up of a set of data that is representative of the edges and surfaces of the original digital image **that is characterised in that**
   it comprises a plurality of photoreceptor emulators that emulate photoreceptor cells and connected to the data input; a plurality of horizontal emulators that emulate horizontal cells and each connected to at least one of the photoreceptor emulators; a plurality of bipolar emulators that emulate bipolar cells and each connected to a plurality of horizontal emulators and to a plurality of photoreceptor emulators; and a plurality of ganglion emulators that emulate ganglion cells and each connected to a plurality of bipolar emulators and to a data output;
   each emulator has a cellular base structure with a modulated data input, a calculation centre to process the modulated data and an output of data processed by the calculation centre;
   the emulators make up a virtual retina in which each emulator is parametrised by
   a first parameter that is representative of the type of emulators to which it is connected and of its relative weights that are indicative of the contribution of each type of emulator to the input signal received by the emulator to which they are connected,
   a second parameter that is representative of an integration radius that is indicative of the area of circular connections of a modulated input to, the emulator by which it receives modulated data of emulators to which it is connected in said connection area and
   a third parameter representative of a position of the emulated cell in the primate retina extrapolated to the virtual retina, in such a way that the third parameters make up a set that emulates a cell distribution of the primate retina;
   the photoreceptor emulators are comprised in a photoreceptor module in which each of the photoreceptor emulators generates a first output value that represents a chromatic component, from the values of the original digital image that are within its influence area;
   the horizontal emulators are comprised in a horizontal emulator module in which each of the horizontal emulators generates a second output value from the weighted sum of the first output values generated by the photoreceptors emulators to which it is directly connected;
   the bipolar emulators are comprised in a bipolar emulator module in which each bipolar emulator generates a third output value through a weighted combination of the output values respectively generated by the photoreceptor emulators and the horizontal emulators to which it is connected;
   the ganglion emulators are comprised in a ganglion module in which each of the ganglion emulators generates a non-linear transformed fourth output value, from the output values of the bipolar emulators to which it is connected, said fourth output values generated by the respective ganglion emulators, defining a set of differentiated images that are representative of the different morphological and chromatic features of the original digital image.

2. System, according to claim 1, **characterised in that** modulated data input of each emulator is based on a Gaussian modulation function.

3. System, according to claims 1 or 2, **characterised in that** the weighted combination corresponding to the output value generated by at least one of the bipolar emulators is a weighted sum function.

4. System, according to claims 1, 2 or 3, **characterised in that** the weighted combination corresponding to the output value generated by at least one of the bipolar emulators is a weighted division function.

5. System, according to claims 1 through 4, **characterised in that** the output value of at least one of the ganglion emulators is generated based on an exponential function.

6.  System, according to at least one of the claims 1 through 5, **characterised in that** at least some of the emulators of the same type are interconnected with each other through interconnections that establish additional input signals received from other types of emulators to which said emulators of the same type are connected.

7.  System, according to at least one of the claims 1 through 6, **characterised in that** the photoreceptor emulator module comprises photoreceptor emulators selected from emulators of type L, M and S cones and rods.

8.  System, according to at least one of the claims 1 through 7, **characterised in that** the horizontal emulator module includes horizontal emulators selected from emulators of horizontal HI and HII cells.

9.  System, according to claim 8, **characterised in that** the horizontal HI cell emulators module are connected to photoreceptor emulators selected from emulators of type L cones, emulators of type M cones and emulators of rods.

10. System, according to claim 8, **characterised in that** the horizontal HII cell emulators module are connected to photoreceptor emulators selected from emulators of type L cones, emulators of type M cones and emulators of type S cones.

11. System, according to at least one of the claims 1 through 10, **characterised in that** the bipolar emulator module comprises bipolar modules selected from emulators of type R ON, R OFF, G ON and G OFF midget bipolar, , diffuse bipolar type DB1, DB2, DB3, DB4, DB5 and DB6, blue bipolar cells and of bipolar rods;

12. System, according to claim 11, **characterised in that**

    - the emulators of midget bipolar cell are connected to photoreceptor emulators selected from emulators of type L cones and emulators of type M cones, and to HI and HII horizontal emulators;
    - the emulators of diffuse bipolar cells are connected to photoreceptors selected from the emulators of type L cones, the emulators of type M cones and the emulators of type S cones and to HI and HII horizontal emulators;
    - the emulators of blue bipolar cells are connected to photoreceptor emulators that emulate type S cones and to HII horizontal emulators;
    - the bipolar cell emulators that emulate bipolar rods are connected to photoreceptor emulators that emulate rods and to HI horizontal cell emulators.

13. System, according to at least one the claims 1 through 12, **characterised in that** the ganglion emulator module includes ganglion emulators selected from emulators of cells midget ganglion type R ON, R OFF, G ON and G OFF, parasol type ON and OFF, midget bistratified, large sparse type ON and OFF, giant sparse type ON and OFF, Broad Thorny and Narrow Thorny type ON and OFF cells.

14. System, according to claim 13, **characterised in that**
    the emulators of type OFF midget ganglion cells are connected to the emulators of type OFF midget bipolar cells;
    the emulators of type ON midget ganglion cells are connected to emulators of type ON midget bipolar cells;
    the the emulators of type OFF parasol ganglion cells are connected to bipolar emulators selected from emulators of diffuse bipolar cells of type DB2 and DB3;
    the emulators of type ON parasol ganglion cells are connected to bipolar emulators selected from emulators of diffuse bipolar cells of type DB4 and DB5;
    the emulators of bistratified ganglion cells are connected to bipolar emulators selected from emulators of diffuse bipolar cells of type DB1 and DBB;
    the emulators of type OFF large sparse ganglion cells are connected to bipolar emulators that emulate type DB1 diffuse bipolar cells;
    the emulators of type ON large sparse ganglion cells are connected to bipolar emulators that emulate type DB6 diffuse bipolar cells;
    the emulators of type OFF giant sparse ganglion cells are connected to bipolar emulators that emulate type DB1 diffuse bipolar cells;
    the emulators of type ON giant sparse ganglion cell emulators are connected to bipolar emulators selected among emulators that emulate type DB6 diffuse bipolar cells;
    the emulators of type Broad Thorny ganglion cells are connected to bipolar emulators selected from emulators of type DB2 and DB4 diffuse bipolar cells;
    the emulators of type OFF Narrow Thorny ganglion cells are connected to bipolar emulators that emulate type DB2 diffuse bipolar cells;

the emulators of ype ON Narrow Thorny ganglion cells are connected to bipolar emulators that emulate type DB4 diffuse bipolar cells.

**FIG. 1**

FIG. 2

1

Input

Cell
core

2

Output

3

**FIG. 3**

Set of cells within the integration radius.

**FIG. 4**

X axis

Cell layer i-1

Integration
radius layer i

Cell made
mesh

i-1

C

i-1

A

B

Y axis

D

E

F

i

Overlapping factor in cell B:
1+0.3+0.1=1.4

Overlapping factor in cell E =
1+1+1 = 3

FIG. 5

FIG. 6

FIG. 7

FIG. 8

EP 2 487 627 A1

```
┌──────────┐   ┌──────────────┐                              ┌──────────┐   ┌──────────┐   ┌──────────┐
│ Original │   │ Photoreceptor│   ┌──────────┐   ┌────────┐  │ Bipolar  │   │ Ganglion │   │          │
│  Image   │⟹ │   emulator   │⟹ │ Weighted │⟹ │emulator│⟹ │ Emulator │⟹ │ Output   │
│          │   │   module     │   │Combination│   │ Module │  │  Module  │   │          │   │  Data    │
└──────────┘   └──────────────┘   └──────────┘   └────────┘  └──────────┘   └──────────┘   └──────────┘
                      ⟱              ⟰
                ┌──────────┐
                │Horizontal│
                │ Emulator │
                └──────────┘
```

# FIG. 9

Signals of the emulator
to which it is connected
or of the original image  →  ┌──────────┐      ┌──────────┐      ┌──────────┐
in the case of the          │DataInput │ ⟹  │Calculation│ ⟹  │  Output  │ →  Output
photoreceptor emulator  →  │          │      │  Centre  │      │  Value   │     Value
                            └──────────┘      └──────────┘      │Generator │
                                                                 └──────────┘

# FIG. 10

**Europäisches Patentamt**
**European Patent Office**
**Office européen des brevets**

# EUROPEAN SEARCH REPORT

Application Number

EP 11 38 2039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADRIEN WOHRER ET AL: "Virtual Retina: A biological retina model and simulator, with contrast gain control", JOURNAL OF COMPUTATIONAL NEUROSCIENCE, KLUWER ACADEMIC PUBLISHERS, BO, vol. 26, no. 2, 1 August 2008 (2008-08-01), pages 219-249, XP019678598, ISSN: 1573-6873 * paragraphs [0002] - [0004] * | 1-14 | INV. G06N7/06 |
| A,D | FRANCISCO JAVIER DÃAZ-PERNAS ET AL: "A Bio-inspired Neural Model for Colour Image Segmentation", 2 July 2008 (2008-07-02), ARTIFICIAL NEURAL NETWORKS IN PATTERN RECOGNITION; [LECTURE NOTES IN COMPUTER SCIENCE], SPRINGER BERLIN HEIDELBERG, BERLIN, HEIDELBERG, PAGE(S) 240 - 251, XP019091886, ISBN: 978-3-540-69938-5 * paragraphs [0001], [0002] * | 1-14 | |
| A,D | KUNKEL T ET AL: "A neurophysiology-inspired steady-state color appearance model", JOURNAL OF THE OPTICAL SOCIETY OF AMERICA A, OPTICAL SOCIETY OF AMERICA, US, vol. 26, no. 4, 1 April 2009 (2009-04-01), pages 776-782, XP002596385, ISSN: 1084-7529, DOI: 10.1364/JOSAA.26.000776 [retrieved on 2009-03-16] * paragraphs [0003], [0004] * | 1-14 | TECHNICAL FIELDS SEARCHED (IPC) G06N |

-/--

The present search report has been drawn up for all claims

| Place of search | Date of completion of the search | Examiner |
|---|---|---|
| The Hague | 7 December 2011 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

Application Number

EP 11 38 2039

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | THOMAS SERRE ET AL: "Robust Object Recognition with Cortex-Like Mechanisms", IEEE TRANSACTIONS ON PATTERN ANALYSIS AND MACHINE INTELLIGENCE, IEEE SERVICE CENTER, LOS ALAMITOS, CA, US, vol. 29, no. 3, 1 March 2007 (2007-03-01), pages 411-426, XP011157927, ISSN: 0162-8828, DOI: 10.1109/TPAMI.2007.56 * paragraphs [0002], [0004] * | 1-14 | |
| A,D | HAYASHIDA ET AL: "A retinal circuit model accounting for functions of amacrine cells", NEUROSCIENCE RESEARCH, ELSEVIER, SHANNON, IR, vol. 58, 1 January 2007 (2007-01-01), page S213, XP022175952, ISSN: 0168-0102, DOI: 10.1016/J.NEURES.2007.06.981 * paragraph [0002] * | 1-14 | |

TECHNICAL FIELDS
SEARCHED (IPC)

The present search report has been drawn up for all claims

| Place of search | Date of completion of the search | Examiner |
|---|---|---|
| The Hague | 7 December 2011 | Valencia, Erika |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. SIMINOFF.** SIMULATED BIPOLAR CELLS IN FÓVEA OF HUMAN RETINA. *BIOLOGICAL CYBERNETICS,* 1991, vol. 64, 497-504
- **H. MOMIJI H. ; A. A. BHARATH ; M. W. HANKINS ; C. KENNARD.** NUMERICAL STUDY OF SHORT-TERM AFTERIMAGES AND ASSOCIATE PROPERTIES IN FÓVEAL VISION. *VISION RESEARCH,* 2006, vol. 46, 365-381
- **D.S. LEBEDEV ; D.W. MARSHACK.** AMACRINE CELL CONTRIBUTIONS TO RED-GREEN COLOR OPPONENCY IN CENTRAL PRIMATE RETINA: A MODEL STUDY. *VISUAL NEUROSCIENCE,* 2007, vol. 24, 535-547
- **R.SIMINOFF.** SIMULATED BIPOLAR CELLS IN FÓVEA OF HUMAN RETINA. *BIOLOGICAL CYBERNETICS,* 1991, vol. 64, 497-504
- **HENN_02 ; H. MOMIJI H. ; A. A. BHARATH ; M. W. HANKINS ; C. KENNARD.** NUMERICAL STUDY OF SHORT-TERM AFTERIMAGES AND ASSOCIATE PROPERTIES IN FÓVEAL VISION. *VISION RESEARCH,* 2006, vol. 46, 365-381
- **S. SHAH ; M. D. LEVINE.** VISUAL INFORMATION PROCESS IN THE PRIMATE CONE PATHWAYS PART I MODEL. *IEEE TRANSACTIONS ON SYSTEMS, MAN AND CYBERNETICS - PART B CYBERNETICS,* 1996, vol. 26 (2), 259-274
- **D. BALYA ; B. ROSKA ; T. ROSKA ; F.S. WERBLIN.** A CNN FRAMEWORK FOR MODELING PARALLEL PROCESSING IN A MAMMALIAN RETINA. *INTERNATIONAL JOURNAL OF CIRCUIT THEORY AND APPLICATIONS,* 2002, 363-393
- **J. H. VAN HATEREN ; L. RUTTIGER ; H. SUN ; B. B. LEE.** PROCESSING OF NATURAL TEMPORAL STIMULI BY MACAQUE RETINAL GANGLION CELLS. *THE JOURNAL OF NEUROSCIENCE,* 2002, vol. 22 (22), 9945-9960
- **W. RODIECK.** QUANTITATIVE ANALYSIS OF CAT RETINAL GANGLION CELL RESPONSE TO VISUAL STIMULI. *VISION RESEARCH,* 1965, vol. 5, 583-601
- **D.S. LEBEDEV ; D.W. MARSHACK.** AMACRINE CELL CONTRIBUTIONS TO RED-GREEN COLOR OPPONENCY IN CENTRAL PRIMATE RETINA: A MODEL STUDY. *VISUAL NEUROSCIENCE,* 2007, vol. 24, 535-547, XU_02, WOHR_08, HENN_02
- **C. KOCH.** BIOPHYSICS OF COMPUTATION. OXFORD UNIVERSITY PRESS, 1999
- **SHAH, M. D. LEVINE.** VISUAL INFORMATION PROCESS IN THE PRIMATE CONE PATHWAYS PART I MODEL. *IEEE TRANSACTIONS ON SYSTEMS, MAN AND CYBERNETICS - PART B CYBERNETICS,* 1996, vol. 26 (2), 259-274
- **A. VALBERG ; T. SEIM.** NEURAL MECHANISMS OF CHROMATIC AND ACHROMATIC VISION. *COLOR RESEARCH & APPLICATION,* 2008, vol. 33 (I 6), 433-443
- **T. KUNKEL T ; E. REINHARD.** A NEUROPHYSIOLOGY-INSPIRED STEADY-STATE COLOR APPEARANCE MODEL. *JOSA A,* 2009, vol. 26 (4), 776-782
- **K. A. ZAGHLOUL.** OPTIC NERVE SIGNALS IN A NEUROMORPHIC CHIP I: OUTER AND INNER RETINA MODEL. *IEE TRANSACTIONS ON BIOMEDICAL ENGINEERING,* 2004, vol. 51 (4
- **S. GROSSBERG S ; E. MINGOLLA ; J. WILLIAMSON.** SYNTHETIC APERTURE RADAR PROCESSING BY A MULTIPLE SCALE NEURAL SYSTEM FOR BOUNDARY AND SURFACE REPRESENTATION. *NEURAL NETWORKS,* 1995, vol. 8 (7-8), 1005-1028
- **F. J. DÍAZ-PERNAS ; ANTÓN-RODRIGUEZ ; J. F. DÍEZ-HIGUERA ; M. MARTÍNEZ-ZARZUELA.** A BIO-INSPIRED NEURAL MODEL FOR COLOUR IMAGE SEGMENTATION. *ANNPR 2008,* 2008, vol. 5064, 240-251
- **CARANDINI , D.J. HEEGER.** SUMMATION AND DIVISION BY NEURONS IN PRIMATE VISUAL CORTEX. *SCIENCE,* 1994, vol. 264, 1333-1336
- **D. J. HEEGER ; SIMONCELLI E. P. ; MOVSHON J. A.** COMPUTATIONAL MODELS OF CORTICAL VISUAL PROCESSING. *PROCEEDINGS OF THE NATIONAL ACADEMY OF SCIENCES,* 1996, vol. 623-627, 93
- **V. TORRE ; T. POGGIO.** A SYNAPTIC MECHANISM POSSIBLY UNDERLYING DIRECCIONAL SELECTIVITY TO MOTION. *PROC. ROY. SOC LOND. B,* 1978, vol. 202, 409-416
- **J. W PILLOW ; J. SHLENS ; L. PANINSKI ; A. SHER ; A. M. LITKE ; E. J. CHICHILNISKY ; E. P. SIMONCELLI.** SPATIO-TEMPORAL CORRELATIONS AND VISUAL SIGNALLING IN A COMPLETE NEURONAL POPULATION. *NATURE,* 2008, vol. 454, 995-999
- **MEISTER M ; BERRY MJ 2ND.** THE NEURAL CODE OF THE RETINA. *NEURON.,* 1999, vol. 22 (3), 435-50

- **F. J. DÍAZ-PERNAS ; ANTÓN-RODRIGUEZ ; J. F. DÍEZ-HIGUERA ; M. MARTÍNEZ-ZARZUELA.** A BIO-INSPIRED NEURAL MODEL FOR COLOUR IMAGE SEGMENTATION. *ANNPR 2008, LNAI,* 2008, vol. 5064, 240-251
- **L. M. MARTINEZ.** THE GENERATION OF VISUAL CORTICAL RECEPTIVE FIELDS. *PROGRESS IN BRAIN RES.,* 2006, vol. 154
- **G.Q. BI ; M.M. POO.** SYNAPTIC MODIFICATIONS IN CULTURED HIPPOCAMPAL NEURONS: DEPENDENCE ON SPIKE TIMING, SYNAPTIC STRENGTH, AND POSTSYNAPTIC CELL TYPE. *J. NEUROSCI.,* 1998, vol. 18
- **M. C. BOOTH ; E. T. ROLLS.** VIEW-INVARIANT REPRESENTATIONS OF FAMILIAR OBJECTS BY NEURONS IN THE INFERIOR TEMPORAL VISUAL CORTEX. *CEREB. CORTEX,* 1998, vol. 8
- **G. KREIMAN ; C.P. HUNG ; A. KRASKOV ; R.Q. QUIROGA ; T. POGGIO ; J.J. DICARLO.** OBJECT SELECTIVITY OF LOCAL FIELD POTENTIALS AND SPIKES IN THE MACAQUE INFERIOR TEMPORAL CORTEX. *NEURON,* 2006, vol. 49
- **T. SERRE ; L. WOLF ; S. BILESCHI ; M. RIESENHUBER ; T. POGGIO.** OBJECT RECOGNITION WITH CORTEX-LIKE MECHANISMS. *IEEE TRANSACTIONS ON PATTERN ANALYSIS AND MACHINE INTELLIGENCE,* 2007, vol. 29, 3
- LEARNING A DICTIONARY OF SHAPE-COMPONENTS IN VISUAL CORTEX: COMPARISON WITH NEURONS, HUMANS AND MACHINES. **T. SERRE.** LEARNING A DICTIONARY OF SHAPE-COMPONENTS IN VISUAL CORTEX: COMPARISON WITH NEURONS, HUMANS AND MACHINES. 2006
- **T. SERRE.** LEARNING A DICTIONARY OF SHAPE-COMPONENTS IN VISUAL CORTEX: COMPARISON WITH NEURONS, HUMANS AND MACHINES. 2006
- **C. VAN ESSEN.** PROCESSING OF COLOR, FORM AND DISPARITY INFORMATION IN VISUAL AREAS VP AND V2 OF VENTRAL EXTRASTRIATE CORTEX IN THE MACAQUE MONKEY. *J. NEUROSCI.,* 1986, vol. 6 (8), 2327-51
- **C. P. HUNG ; G. K. KREIMAN ; T. POGGIO ; J. J. DICARLO.** FAST READOUT OF OBJECT IDENTITY FROM MACAQUE INFERIOR TEMPORAL CORTEX. *SCIENCE,* 2005, vol. 310